# EUROPEAN PATENT SPECIFICATION

(11) **EP 1 731 354 B1**
(45) Date of publication and mention of the grant of the patent: **19.12.2012**
(21) Application number: 06252566.2
(22) Date of filing: 17.05.2006
(51) Int. Cl.: B60N 2/24, B60N 2/14, B62D 31/00

(54) **Vehicle**
Fahrzeug
Véhicule

(30) Priority: 28.05.2005 GB 0510985
(43) Date of publication of application: 13.12.2006
(73) Proprietor: Care-Knight Limited, Staffordshire, ST4 3AL (GB)
(72) Inventor: Steadman, William David, Port Saint Lucie, Florida 34592 (US)
(74) Representative: Sales, Robert Reginald

(56) References cited:
- EP-A- 0 985 595
- US-A- 4 671 563
- US-B1- 6 264 260

## Description

This invention concerns improvements in or relating to vehicles, and particularly but not exclusively mobility scooters.

The use of mobility scooters is increasing significantly. However, most such scooters are not provided with a cab or any protection, and are therefore not usable, or not pleasant to use, in inclement weather. Previously where cabs have been provided, this has usually resulted in a larger scooter being necessary than would otherwise be the case. As such scooters have generally been heavier, they have thus used more power. Also, it is not desirable for such scooters to be too big, as if this is the case they may be too large to be usable on pavements, where they are often required to be driven.

US 4 671 563 A discloses a vehicle according to the preamble of claim 1.

According to the present invention there is provided a vehicle, having features of claim 1.

Preferably the pivotal mounting is substantially at the rear of the vehicle.

The pivotal mounting may be in the form of a hinge arrangement between the moving portion and the remainder of the rear body part. The hinge arrangement preferably extends substantially centrally up the rear body part.

The rear body part preferably also extends on each side of the vehicle, part way towards the front of the vehicle. The rear body part preferably extends forwards to substantially adjacent the front of the seat.

The seat preferably includes a base part and a back part. The back part is preferably pivotally mounted to the base part. The seat may include a cushion assembly, which assembly may include a part which fits over the back part in a sleeve arrangement.

The vehicle preferably includes a rear storage area above which the seat locates in the closed position. The storage area preferably locates batteries for the vehicle, and preferably also provides storage space. The storage space may include a drawer located above the batteries, which drawer may be removable to permit access to the batteries. The storage area preferably includes side panels which can also be removed to permit access to the batteries.

A window or windows may be provided in the rear body part.

A catch may be provided for retaining the moving portion in the closed position, and the catch may be selectively engageable with the body roof.

Side curtains may be provided selectively extending from an upper part of the body.

Selectively releasable securing means are preferably provided between the front body part and the roof. The chassis may include selectively separable front and rear parts, with the front chassis part mounting the front body part, and the rear chassis part mounting the rear body part and roof.

The transmission and a motor for the vehicle are preferably mounted on a sub frame substantially between the rear wheels. The sub frame is preferably selectively removable from the rear chassis part to permit access to the transmission and motor.

An embodiment of the present invention will now be described by way of example only and with reference to the accompanying drawings, in which:-
Fig. 1 is a diagrammatic front perspective view of a mobility scooter according to the invention in an open position;

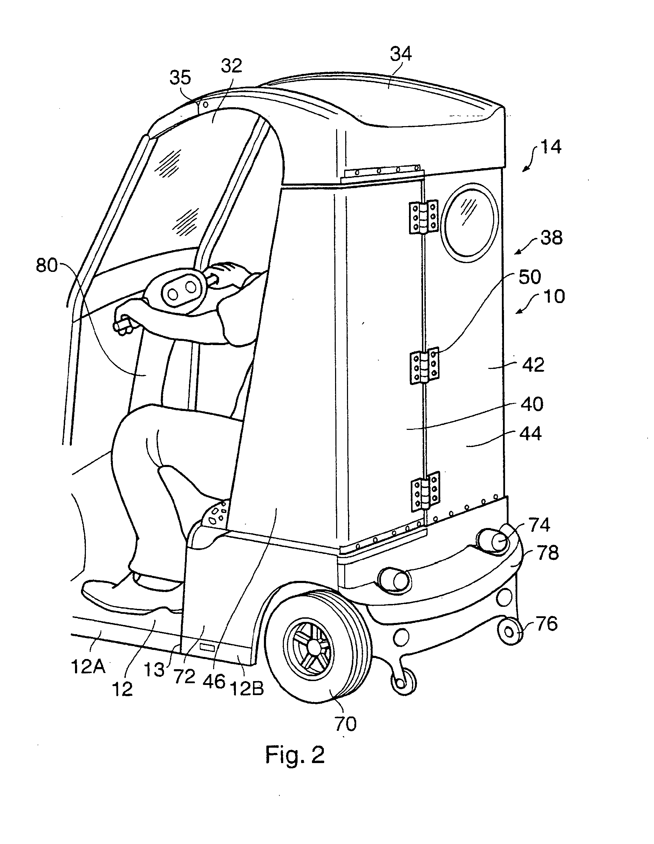

Fig. 2 is a diagrammatic rear perspective view of the scooter of Fig. 1 in use in a closed position; and
Fig. 3 is a diagrammatic front perspective view of part of the scooter of Fig.1.

The drawings show a mobility scooter 10 which can be driven in a conventional manner. The scooter 10 includes a chassis 12 with a body 14 mounted thereon. The chassis 12 comprises front and rear parts 12A, 12B, which can be selectively separated at 13. The parts 12A and 12B are connected by appropriate nuts and bolts (not shown).

The body 14 includes a front part 16 with a first lower part 18 which extends substantially vertically and an upper part 20 which is inclined rearwardly. The lower part 18 which extends above a bumper 22 on the chassis 12, has a bottom section 24 mounting two headlights 26. Provided thereabove is a first transparent part 28. The upper part 20 comprises a lower cross piece 30 with a second transparent part 32 thereabove.

The top of the upper part 20 joins to a roof 34 of the body 14 along a line 35, and is mounted thereto by a plurality of bolts 36 permitting separation if required along with separation of the front and rear chassis parts 12A and 12B, for major servicing or repair. The roof 34 extends gently convexly to a rear body part 38. The rear part 38 is provided in two parts, an openable part 40 and a fixed part 42. The openable and fixed parts 40, 42 are generally similar with a vertical rear face 44 and side panels 46 which diverge downwardly. A central strut 48 is provided within the rear part 38, and the openable part 40 is pivotally mounted thereto by three hinges 50.

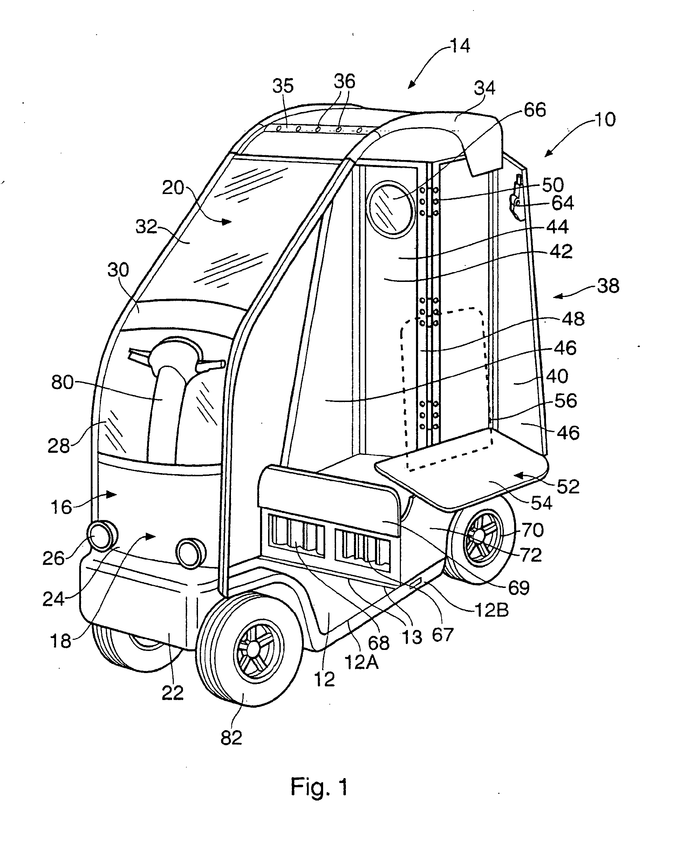

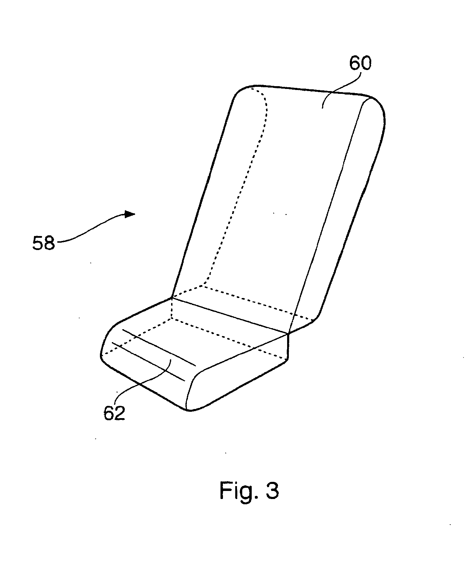

The openable part 40 mounts a seat 52 with a base part 54 and a back part 56 pivotally mounted thereto. In Fig. 1 the back part 56 has only been shown in shadow outline for clarity. A cushion assembly 58 (Fig. 3) is provided for the seat 52 with a back part 60 which fits over the seat back part 56 in the manner of a sleeve, and a cushioned base part 62 which fits on the seat base part 54 by virtue of fleece and hook fasteners (not visible).

A catch 64 is provided at an upper part of the openable part side panel 46 and is selectively engageable with the roof 34 to retain the openable part 40 in a closed position with the seat 52 facing forwards. Mounting pins or bolts (not shown) are provided on the lower edge of the rear part 38 to permit removal thereof from the chassis 12 if required for major servicing or repair. A circular window 66 is provided towards the top of the fixed part 42.

A rear storage area 67 is provided on the rear part 12B of the chassis 12 and in front of the rear wheels 70, but below the seat 52. The storage area 67 locates batteries 68 for the scooter 10, and also provides a storage space in the form of a removable drawer 69 above the batteries 68. Side walls 72 are provided for the rear storage area, and the walls 72 can readily be removed again for servicing or repair. The motor and transmission for the scooter 10 are mounted on a sub frame (not visible) between the rear wheels 70, which sub frame can be removed if required from the chassis 12.

Rear lights 74 and jockey wheels 76 to prevent rearwards toppling of the scooter 10, are provided on the rear of the storage area 67, along with a bumper 78. Towards the front of the chassis 12 an adjustable steering column 80 is provided connected to the front wheels 82.

In use the openable part 40 can be pivotted outwardly as shown in Fig. 1 to readily permit a person to sit down thereon. The person can then rotate the seat 52 and hence openable part 42 such that the seat 52 faces forward, and the catch 64 will automatically close retaining the openable part 40 closed. The scooter 10 can then be driven in a usual manner whilst providing significant protection for a driver, and particularly from inclement weather. If required side curtains (not shown) may be provided extending from the roof 34 and perhaps also the upper part 20 of the front part 16 to provide extra protection, or at least protection when the scooter is not in use.

When a person wishes to alight the scooter 10, the catch 64 is released and the seat 52 and hence openable part 40 can be pivoted outwardly to the position shown in Fig. 1 to permit a person to readily leave the scooter.

There is thus described a scooter which provides for a number of advantages. Shelter from inclement weather is provided and with this design it is not necessary to provide overall larger dimensions for the scooter by virtue of the pivoting of the openable part with the seat, relative to conventional designs. With this arrangement it is not necessary to provide a substantial seat with strong armrests which is normally the case with such scooters, and in view of this there is little if any weight gain relative to existing scooters despite the provision of a cover for a driver. Significant storage area is provided beneath the seat, and a certain amount of storage will also be available behind the seat back. There would also be space for instance for a walking stick or frame on the inside of the non-openable side of the body.

The seating arrangement in the present scooter means it is not possible for a driver to lean backwards over the rear wheels which can occur on existing scooters, and thus improved stability is attained. The features that the body and chassis can be separated into two parts, the sub frame can be removed from the chassis, and the rear body part can be removed from the chassis, mean that major servicing, and repairs can readily be carried out. Therefore the scooter can readily be divided into two parts, with a front part comprising the front part of the chassis and the front part of the body, and a rear part comprising the rear part of the chassis, the roof, the body rear part, and the sub frame. Accordingly, in the case of damage, a front or rear part of the scooter could be temporarily or permanently replaced.

The invention could be used with other types of vehicles, and various other modifications may be made without departing from the scope of the invention. For example, the openable part could be differently pivotally mounted. A different seat could be used.

## Claims

1. A vehicle (10) in the form of a single seat mobility scooter, the vehicle including a chassis (12) mounting front (82) and rear (70) wheels, a seat (52) for a driver of the vehicle, the seat (52) extending across a substantial part of the width of the vehicle (10), and a body (14) mounted on the chassis (12), the body (14) including a front part (16) and a roof (34) extending therefrom to a rear part (38), the rear body part (38) having a fixed portion (42) and a moving portion (40), which moving portion (40) mounts the seat (52) and is pivotally mounted to the fixed portion (42) about a generally vertical axis (48) located behind the seat (52) and intermediate side edges thereof, such that the moving portion (40) is movable between a closed position with the seat (52) facing forwards, and an open position with the seat (52) inclined outwardly to permit a person to get on or off the seat (52), the seat (52) extending across the width of the fixed portion (42) and also the width of the moving portion (40), **characterised in that** the moving portion (40) is pivotally mounted solely to the find portion (42).

2. A vehicle according to claim 1, **characterised in that** the pivotal mounting (48) is substantially at the rear of the vehicle.

3. A vehicle according to claims 1 or 2, **characterised in that** the pivotal mounting is in the form of a hinge arrangement (50) between the moving portion (40) and the remainder (42) of the rear body part (38).

4. A vehicle according to claim 3, **characterised in that** the hinge arrangement extends substantially centrally up the rear body part (38).

5. A vehicle according to any of the preceding claims, **characterised in that** the vehicle (10) includes a rear storage area (67) above which the seat (52) locates in the closed position.

## Patentansprüche

1. Fahrzeug (10)in Form eines einsitzigen Leichtfahrzeugs bzw. Elektromobils mit einem Fahrgestell (12) und daran montierten Vorderrädern (82) und Hinterrädern (70), einem für einen Fahrer des Fahrzeugs bestimmten Sitz (52), der sich über einen wesentlichen Teil der Breite des Fahrzeugs (10) erstreckt, und einer auf dem Fahrgestell (12) montierten Karosserie (14), die einen Vorderteil (16) und ein sich davon zu einem Hinterteil (38) erstreckendes Dach (34) enthält, wobei der Karosserie-Hinterteil (38) einen feststehenden Abschnitt (42) und einen beweglichen Abschnitt (40) hat, wobei der Sitz (52) an dem beweglichen Abschnitt (40) montiert ist und der bewegliche Abschnitt (40) an dem feststehenden Abschnitt (42) um eine im wesentlichen vertikale Achse (48) angelenkt ist, die hinter dem Sitz (52) und zwischen Seitenkanten der Abschnitte angeordnet ist, so dass der bewegliche Abschnitt (40) bewegbar ist zwischen einer geschlossenen Stellung mit nach vorne weisendem Sitz (52) und einer geöffneten Stellung mit nach außen geneigtem Sitz (52), um einer Person zu ermöglichen, auf den Sitz (52) oder von diesem herunter zu gelangen, wobei sich der Sitz (52) über die Breite des feststehenden Abschnitts (42) und auch über die Breite des beweglichen Abschnitts (40) erstreckt, **dadurch gekennzeichnet, dass** der bewegliche Abschnitt (40) lediglich an dem feststehenden Abschnitt (42) gelenkig montiert ist.

2. Fahrzeug nach Anspruch 1, **dadurch gekennzeichnet, dass** sich die Anlenkung im wesentlichen im hinteren Teil des Fahrzeugs befindet.

3. Fahrzeug nach Anspruch 1 oder 2, **dadurch gekennzeichnet, dass** die Anlenkung die Form einer Scharnier-Anordnung (50) zwischen dem beweglichen Abschnitt (40) und dem restlichen Teil (42) des Karosserie-Hinterteils (38) hat.

4. Fahrzeug nach Anspruch 3, **dadurch gekennzeichnet, dass** die Scharnier-Anordnung sich im Karosserie-Hinterteil (38) im wesentlichen mittig nach oben erstreckt.

5. Fahrzeug nach einem der vorhergehenden Ansprüche, **dadurch gekennzeichnet, dass** das Fahrzeug (10) einen hinteren Laderaum (67) hat, oberhalb welchem sich der Sitz (52) in der geschlossenen Stellung befindet.

## Revendications

1. Véhicule (10) se présentant sous la forme d'un scooter de mobilité à un seul siège, le véhicule comprenant un châssis (12) monté sur des roues avant (82) et arrière (70), un siège (52) pour un conducteur du véhicule, le siège (52) s'étendant sur une partie substantielle de la largeur du véhicule (10), et un corps (14) monté sur le châssis (12), le corps (14) comprenant une partie avant (16) et un toit (34) s'étendant depuis celle-ci vers une partie arrière (38), la partie de corps arrière (38) présentant une portion fixe (42) et une portion mobile (40), laquelle portion mobile (40) comprend le siège (52) et est montée de manière pivotante sur la portion fixe (42) autour d'un axe généralement vertical (48) situé derrière le siège (52) et ses arêtes latérales intermédiaires de sorte que la portion mobile (40) est mobile entre une position fermée avec le siège (52) tourné vers l'avant, et une position ouverte avec le siège (52) tourné vers l'extérieur pour permettre à une personne de monter sur ou de descendre du siège (52), le siège (52) s'étendant sur la largeur de la portion fixe (42) de même que sur la largeur de la portion mobile (40), **caractérisé en ce que** la portion mobile (40) est montée de manière pivotante seulement sur la portion fixe (42).

2. Véhicule selon la revendication 1, **caractérisé en ce que** le montage pivotant (48) est sensiblement sur l'arrière du véhicule.

3. Véhicule selon la revendication 1 ou 2, **caractérisé en ce que** le montage pivotant se présente sous la forme d'un ensemble d'articulation (50) entre la portion mobile (40) et le reste (42) de la partie de corps arrière (38).

4. Véhicule selon la revendication 3, **caractérisé en ce que** l'ensemble d'articulation s'étend sensiblement centralement et verticalement sur la partie de corps arrière (38).

5. Véhicule selon l'une quelconque des revendications précédentes, **caractérisé en ce que** le véhicule (10) comprend une zone de stockage arrière (67) au-dessus de laquelle le siège (52) se situe dans la position fermée.
